# EUROPEAN PATENT APPLICATION

(11) **EP 2 387 191 A2**
(43) Date of publication of application: **16.11.2011**
(21) Application number: 11002051.8
(22) Date of filing: 11.03.2011
(51) Int. Cl.: H04L 27/26

(54) **Spectral smoothing wireless communications device and associated methods**

(30) Priority: 16.03.2010 US 724595
(71) Applicant: Harris Corporation, Melbourne, FL 32919 (US)
(72) Inventor: Nieto, John Wesley, Rochester, NY 14610 (US); Furmann, William Nelson, Fairport, NY 14450 (US)
(74) Representative: Schmidt, Steffen

(57) **Abstract**

A wireless communication device operates in a wireless communications system including a plurality of wireless communication devices and communicates over a wireless medium. The wireless communication device includes an antenna, a transceiver coupled to the antenna, and a controller to cooperate with the transceiver. The controller is configured to generate and transmit a waveform having a waveform frame format including data blocks and repeating training blocks, and to modulate the repeating training blocks to reduce spectral artifacts. The controller may be configured to modulate the repeating training blocks with a pseudo-random phase, a frequency offset or with an amplitude modulation, for example.

## Description

### Field of the Invention

The present invention relates to the field of communications, and, more particularly, to wireless data communications and related methods.

### Background of the Invention

A typical wireless communications system comprises a plurality of wireless communications devices exchanging data with each other. In some wireless communications systems, for example, infrastructure networks, the system may further comprise a wireless base station for managing communications between the wireless communications devices. In other words, each intra-system communication would be exchanged via the wireless base station. In other wireless communications systems, for example, mesh networks and ad hoc wireless networks, the wireless base station may be omitted, i.e., the wireless communications devices may communicate directly with each other.

In the typical digital wireless communications system, the data, which at its most basic level comprises 1s and Os, to be transmitted is encoded into a modulation waveform. Depending on the data being transmitted, the transmitter device changes the transmitted signal based upon the modulation waveform.

A typical modulation waveform includes M-ary frequency-shift keying (M-FSK), which is a frequency modulation scheme, digital information is transmitted through discrete frequency changes of a carrier wave. A particular example of the M-FSK modulation waveform is binary FSK (BFSK or 2-FSK), which uses two discrete frequencies to transmit digital data. Other modulation waveforms include, for example, Gaussian minimum shift keying (GMSK), M-ary pulse amplitude modulation (M-PAM), M-ary phase shift keying (M-PSK), and M-ary quadrature amplitude modulation (M-QAM). As will be appreciated by those skilled in the art, the choice of waveform depends on the performance demands of the system, for example, throughput and the type of data services. For example, some modulation waveforms are better suited for transmitting voice services rather than pure data services.

The U.S. MIL-STD-188-110B (110B) Appendix C defines a family of waveforms which use a cyclically extended 16 symbol Frank Heimiller (FH) sequence as a mini-probe or known symbols or training block. The auto-correlation properties of FH sequences allow for a simple and low computational complexity approach to channel estimation. Typically, only one FH sequence exists for a particular symbol length (i.e., 4 (2*2), 9 (3*3), 16 (4*4), 25 (5*5), 36 (6*6), 49 (7*7), ...). Note that other sequences exist with similar properties to FH sequences that can provide additional sequence lengths (i.e., 12, 18).

The frame structure of the 110B Appendix C waveforms includes an initial 287 symbol preamble followed by 72 frames of alternating data and known symbols. Each data frame includes a data block having 256 data symbols (i.e., unknown symbols), followed by a mini-probe having 31 symbols of known data (e.g., the cyclically extended 16 symbol FH sequence). Note that the periodic insertion of the same known symbols produces spectral artifacts.

Many modem waveforms may use many different mini-probe sequences to avoid spectral artifacts, for example by using different gold codes. However, such mini-probes or training blocks will not provide correlation properties which allow for the simple computation of a channel estimate. Instead, high computational cost algorithms are used to estimate the channel.

For High Frequency (HF) waveforms (such as 110B Appendix C), there are currently no techniques for smoothing or removing spectral artifacts caused by the repeating FH sequence and/or protection from undesired users demodulating the waveforms.

### Summary of the Invention

In view of the foregoing background, it is therefore an object of the present invention to provide the reduction or removal of spectral artifacts in the waveforms frequency-domain characteristics.

This and other objects, features, and advantages in accordance with the present invention are provided by a wireless communication device, e.g., operating in a wireless communications system including a plurality of wireless communication devices and communicating over a wireless medium. The wireless communication device includes an antenna, a transceiver coupled to the antenna, and a controller to cooperate with the transceiver. The controller is configured to generate and transmit a waveform having a waveform frame format including data blocks and repeating training blocks (i.e., known symbols or mini-probe), and to modify, manipulate or modulate the repeating training blocks to reduce spectral artifacts.

The controller may be configured to the repeating training blocks with a pseudo-random phase, a frequency offset (i.e., an increasing or decreasing delta phase rotation per symbol) or with an amplitude modulation, for example. The controller may be further configured to modulate the data blocks (i.e., unknown symbols) with a pseudo-random phase. The data blocks may define data symbols and the repeating training blocks may define mini-probe symbols, such as FH sequences.

A method aspect is directed to smoothing spectral characteristics of a wireless communications waveform. The method includes generating and transmitting a waveform having a waveform frame format including data blocks and repeating training blocks, and modifying, manipulating or modulating the repeating training blocks to reduce spectral artifacts in the transmitted waveform.

The approach of the present invention of smoothing or removing spectral artifacts in the waveform provides added protection against undesired users since channel estimation will be severely degraded without knowledge of the exact modulation parameters applied to the repeating training blocks.

### Brief Description of the Drawings

FIG. 1 is a schematic diagram of a wireless communications device in a wireless communications system with spectral smoothing via training block modulation in accordance with features of the present invention.

FIG. 2 is a schematic diagram illustrating a frame format for a HF waveform generated with the device of FIG. 1.

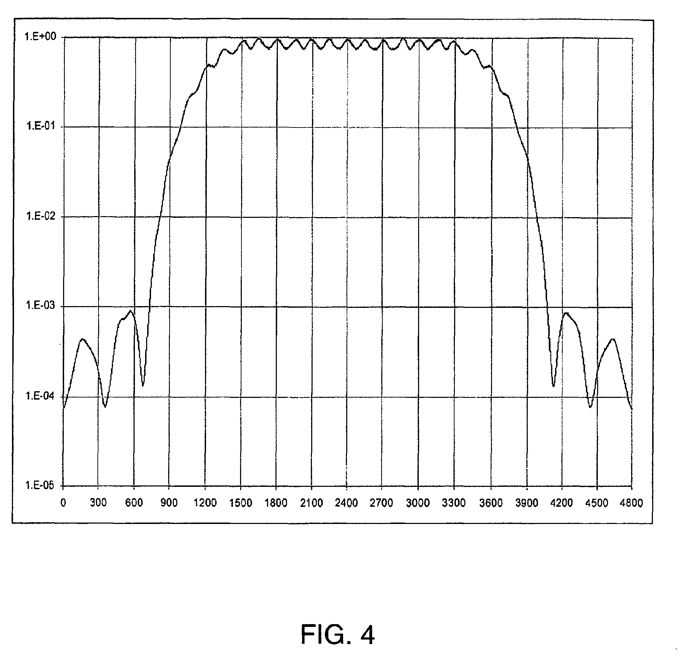

FIGs. 3 and 4 are spectral graphs illustrating comparisons between the visible spectrum characteristics associated with a conventional 110b Appendix C type waveform transmission and the reduced or smoothed spectral characteristics associated with the waveform transmission in accordance with features of an embodiment of the present invention.

### Detailed Description of the Preferred Embodiments

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout, and prime notation is used to indicate similar elements in alternative embodiments.

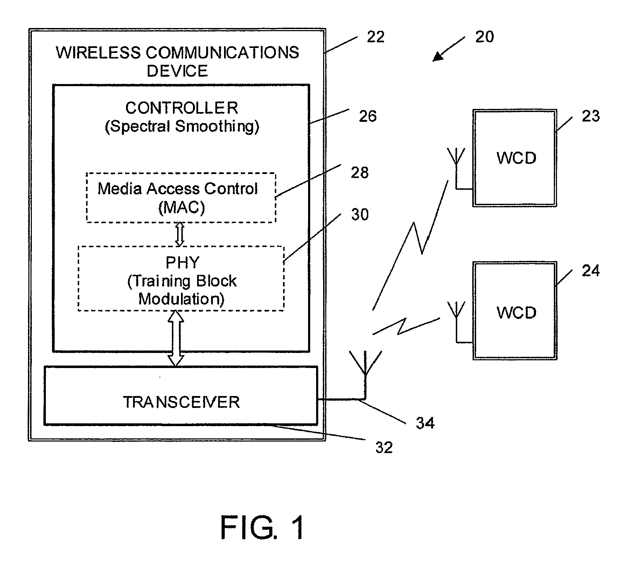

Referring initially to FIG. 1, a wireless communications device **22** operating in a wireless communication system **20** that includes a plurality of such devices **23/24,** will be described. The wireless communication devices transmits and receives data using wireless communication signals, e.g., single-carrier or multicarrier modulation communication signals, such as Orthogonal Frequency Division Modulation (OFDM), and in particular MIL-STD-188-110B compliant communication. The wireless communications device **22** may be any suitable type of mobile or fixed device capable of communicating over wireless channels such as a radio or computer etc.

The wireless communications device **22** includes an antenna **34,** a transceiver **32** coupled to the antenna, and a controller **26** to cooperate with the transceiver and being configured to smooth or reduce spectral artifacts resulting from repeating the same training sequence in the frame format, as will be discussed further below. By way of example, the controller **26** may be implemented using a processor, memory, software, etc., as will be appreciated by those of skill in the art.

Furthermore, the transceiver **32** may include wireless modems, wireless local area network (LAN) devices, cellular telephone devices, etc. By way of example, one or more phased array antennas or directive beam antennas (as well as other suitable antennas) may be used as the antenna **34,** as will be appreciated by those skilled in the art. It will further be understood that the other wireless communications devices **23/24** also preferably include suitable controllers/transceivers as well, which are not shown in FIG. 1 for clarity of illustration.

The controller **26** is configured to transmit information using a frame format (e.g., 110B compliant frame format) including at least data blocks and training blocks. As discussed above, the 110B Appendix C defines a family of waveforms which use FH sequences as mini-probes or known symbols or training blocks. The frame structure for the waveforms includes an initial preamble followed by frames of alternating data and known symbols. Each data frame includes a data block, followed by a training block or mini-probe of known symbols.

The controller **26** at least includes a Media Access Control (MAC) layer **28** and a Physical (PHY) layer **30,** e.g., in accordance with a multilayer protocol hierarchy. Data communications within wireless communications networks **20** typically follow an interconnection architecture (e.g., Open System Interconnection "OSI" or some variation thereof), as do other wireless networks (e.g., wireless LANs). By way of background, the OSI is a network protocol hierarchy which includes seven different control layers, namely (from highest to lowest) the application layer, presentation layer, session layer, transport layer, network layer, data link/media access control (MAC) layer, and physical layer.

Generally, in the OSI model control is passed from one layer to the next at an originating node or terminal starting at the application layer and proceeding to the physical layer. The data is then transmitted, and when it is received at the destination terminal/node, it is processed in reverse order back up the hierarchy (i.e., from the physical layer to the application layer). Furthermore, data corresponding to each particular layer is typically organized in protocol data units (PDUs) or MAC PDUs (MPDUs) referred to as packets at the network level.

The controller **26** similarly operates in accordance with a multi-layer protocol hierarchy which may include a plurality of upper protocol layers (e.g., application layer, presentation layer, session layer, transport layer) which are not shown for ease of illustration, and a plurality of relatively lower protocol layers including the MAC or data link layer **28,** and the physical or PHY layer **30.**

The primary purpose of the PHY **30** is to transmit Media Access Control (MAC) protocol data units (MPDUs) as directed by the MAC **28.** The PHY includes a convergence protocol, e.g., the physical layer convergence protocol (PLCP), and the physical medium dependent (PMD) sublayer.

The MAC layer communicates with the PLCP and when the MAC layer instructs, the PHY (e.g., via the PLCP) prepares MPDUs for transmission. The PHY layer 30 also delivers incoming frames from the wireless medium to the MAC layer. The PHY layer 30 maps the data (i.e., MPDUs) into a frame format suitable for transmission. Under the direction of the convergence protocol, e.g., the PLCP, the PHY provides modulation and demodulation of the frame transmissions.

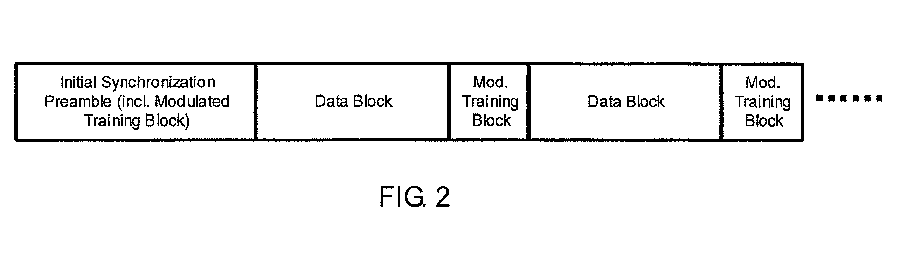

As discussed above, conventional approaches do not address the smoothing or removal of spectral artifacts and/or protection from undesired users demodulating the waveforms. Referring to FIG. 2, the frame structure for the waveforms includes an initial synchronization preamble followed by frames of alternating data and modulated training blocks or mini-probes. So, each data frame includes a data block, followed by a modulated or modified training block or mini-probe of known data. To reduce or smooth the spectral artifacts, the controller **26,** e.g., via the PHY **30,** modulates or modifies the repeating training blocks or mini-probes with a pseudo-random phase, a frequency offset or with an amplitude modulation or any combination thereof.

Knowledge of the exact parameters used to modulate the repeating training blocks is required at the receiver so that the reference sequence used by the demodulator to compute the channel estimate generates the correct estimate. Varying apriori values can be used by both the modulator and demodulator or Time-of-day (or other well-known mechanisms) can be used to synchronize the modulator and demodulator so that both generate the same modulation parameters for each training block.

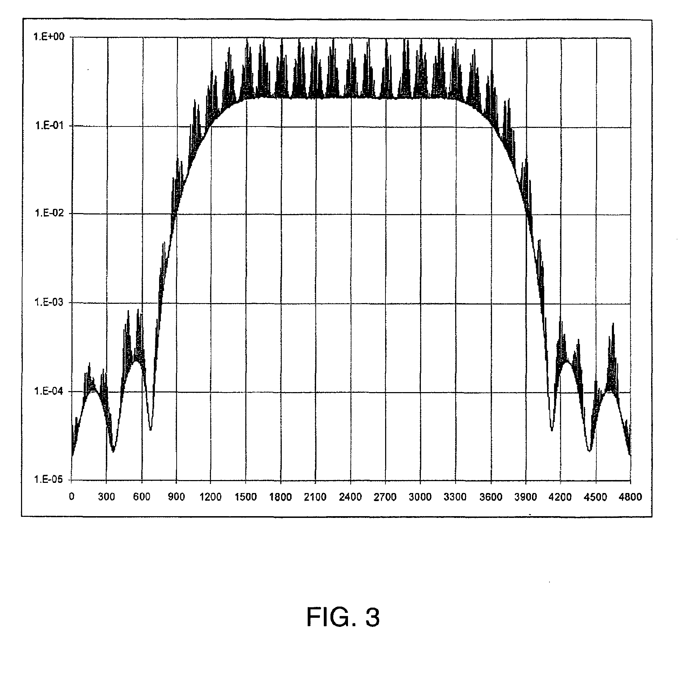

For example, the spectral graph illustrated in FIG. 3 shows an example of a waveform spectrum including spectral artifacts (the periodic peaks across the spectrum). With the approach of the present embodiments, an added benefit is that the training blocks or sequences (e.g., mini-probes) cannot be used for channel estimation without knowledge of the repeating sequence modulation parameters. Thus, referring to the spectral graph in FIG. 3, it can be appreciated that the spectral artifacts in the waveform are reduced or smoothed with the approach of the present invention. With the additional randomization provided by the modulation of the training sequences (e.g., with a pseudo-random phase, frequency offset and/or amplitude modulation), there are less distinguishing features in the frequency domain view of the waveform.

Additionally, the data blocks can be modulated with a pseudo-random phase. This additional modulation of the unknown data symbols will not change the characteristics of the visible spectrum but will offer added protection from demodulation by undesired users since a standard demodulator will not have the proper M-PSK or M-QAM constellation required to demodulate the data correctly.

The approach of the present invention of smoothing or removing spectral artifacts in the waveform provides added protection against undesired users since proper channel estimation will not be possible without knowledge of the modulation parameters applied to the training blocks.

## Claims

1. A wireless communications device comprising:
an antenna;
a transceiver coupled to said antenna; and
a controller operable with said transceiver and being configured to
generate and transmit a waveform having a waveform frame format including data blocks and repeating training blocks, and
modulate the repeating training blocks to reduce spectral artifacts.

2. The wireless communications device according to Claim 1
wherein the controller is configured to modulate the repeating training blocks with a pseudo-random phase.

3. The wireless communications device according to Claim 1
wherein the controller is configured to modulate the repeating training blocks with a frequency offset.

4. The wireless communications device according to Claim 1
wherein the controller is configured to modulate the repeating training blocks with an amplitude modulation.

5. The wireless communications device according to Claim 1
wherein the controller is further configured to modulate the data blocks with a pseudo-random phase.

6. A method of smoothing spectral characteristics of a wireless communications waveform, the method comprising:
generating and transmitting a waveform having awaveform frame format including data blocks and repeating training blocks; and
modulating the repeating training blocks to reduce spectral artifacts in the transmitted waveform.

7. The method according to Claim 6 wherein modulating the repeating training blocks comprises modulating the repeating training blocks with a pseudo-random phase.

8. The method according to Claim 6 wherein modulating the repeating training blocks comprises modulating the repeating training blocks with a frequency offset.

9. The method according to Claim 6 wherein modulating the repeating training blocks comprises modulating the repeating training blocks with an amplitude modulation.

10. The method according to Claim 6 further comprising modulating the data blocks with a pseudo-random phase.
